# EUROPEAN PATENT SPECIFICATION

(11) **EP 3 682 633 B1**
(45) Date of publication and mention of the grant of the patent: **23.04.2025**
(21) Application number: 17781113.0
(22) Date of filing: 09.10.2017
(51) Int. Cl.: H04N 19/119, H04N 19/136, H04N 19/176, H04N 19/147

(54) **APPARATUS AND METHOD FOR IMAGE CODING WITH BOUNDARY PARTITION PROCESSING**
VORRICHTUNG UND VERFAHREN ZUR BILDCODIERUNG MIT GRENZPARTITIONSVERARBEITUNG
APPAREIL ET PROCÉDÉ DESTINÉS AU CODAGE D'IMAGE COMPORTANT UN TRAITEMENT DE PARTITION DE LIMITE

(43) Date of publication of application: 22.07.2020
(73) Proprietor: Huawei Technologies Co., Ltd., Longgang District Shenzhen, Guangdong 518129 (CN)
(72) Inventor: GAO, Han, 80992 München (DE); ZHAO, Zhijie, 80992 München (DE); ESENLIK, Semih, 80992 München (DE); KOTRA, Anand, Meher, 80992 München (DE); LIU, Shan, 80992 München (DE)
(74) Representative: Epping - Hermann - Fischer
(86) International application number: PCT/EP2017/075709
(87) International publication number: WO 2019/072367

(56) References cited:
- US-A1- 2012 082 238
- US-A1- 2017 208 336
- RADHA H ET AL: "Binary space partitioning tree representation of images", JOURNAL OF VISUAL COMMUNICATION AND IMAGE REPRESENTATION, ACADEMIC PRESS, INC, US, vol. 2, no. 3, 1 September 1991 (1991-09-01), pages 201 - 221, XP024891400, ISSN: 1047-3203, [retrieved on 19910901], DOI: 10.1016/1047-3203(91)90023-9

## Description

### FIELD

The present disclosure relates to the field of image coding. Particularly, the disclosure relates to improving coding and decoding of a video with boundary forced partitioning.

### BACKGROUND

Digital video has been widely used since introduction of DVD-discs. Before transmission the video is encoded and transmitted using transmission medium. The viewer receives the video and uses a viewing device to decode and display the video. Over the years the quality of video has improved, for example, because of higher resolutions, color depths and frame rates. This has lead into larger data streams that are nowadays commonly transported over internet and mobile communication networks.

Higher resolution videos, however, typically require more bandwidth as they have more information. In order to reduce the bandwidth requirement video coding standards involving compression of the video have been introduced. When the video is encoded the space requirement is reduced. Often this reduction comes at the cost of quality. Thus, the video coding standards try to find a balance between the bandwidth requirement and the quality.

As video involves a sequence of images results may be achieved also by treating individual images better. Thus, some methods and technologies can be used both in video and individual image processing.

As there is a continuous need for improving quality and reducing space requirement, solutions that maintain the quality with reduced space requirement or improve the quality while maintaining the space requirement are continuously searched. Furthermore, sometimes compromises may be accepted. For example, it may be acceptable to increase the space requirement if the quality improvement is significant.

The High Efficiency Video Coding (HEVC) is an example of a video coding standard that is commonly known to persons skilled in the art. In HEVC, to split a coding unit (CU) into prediction units (PU), eight different partition modes are supported. In addition to the symmetric partitioning modes, four asymmetric partitioning (AMP) modes are supported. These subdivide the CU into two rectangular PUs of different sizes. One of the resulting PUs has a rectangular shape with one side having a length equal to the width and height M of the CU and the other side having a length equal to M/4; the other PU covers the remaining rectangular area of the CU. The asymmetric partitioning modes are only supported for CU sizes larger than 8x8 luma samples.
In HEVC, a coding tree unit (CTU) is split into coding units (CU) by using a quadtree structure denoted as coding tree to adapt to various local characteristics. For small CTU size setting and low resolution sequences, the quad tree approach may be able to make the boundary CTU treatable without introducing too many unnecessary partitions. A boundary CTU is the largest Coding Unit located on a slice/picture boundary. However, for HD or higher resolution and larger CTU configuration unnecessary boundary forced partition happens quite often by using forced QT structure. This typically leads into higher bitrate. US 2017/208336 A1 discloses a method of decoding video data including receiving a bitstream that includes a sequence of bits that forms a representation of a coded picture of the video data, partitioning the coded picture of the video data into a plurality of blocks using three or more different partition structures, and reconstructing the plurality of blocks of the coded picture of the video data. Partitioning the coded picture of the video data may include partitioning the coded picture of the video data into the plurality of blocks using the three or more different partition structures, wherein at least three of the three or more different partition structures may be used at each depth of a tree structure that represents how a particular block of the coded picture of the video data is partitioned.
US 2012/082238 A1 discloses a coding including preparing coding units based on source pictures. The coding units are associated with largest coding tree units. A tree format is utilized in processing the LCTUs into coding units. The preparing includes determining the source picture position based on a coding efficiency goal. The source picture is divided into LCTUs based on the coordinate system and the determined source picture position. There is also a decoding including processing video compression data which is generated based on the coding units based on partitions of LCTUs.

### SUMMARY

The invention is defined by the appended claims. In the following, parts of the description and drawings referring to embodiments which are not covered by the claims are not presented as embodiments of the invention, but as examples useful for understanding the invention. An apparatus and a method for image coding with boundary partitioning processing are disclosed. In image coding and particularly in video coding images are typically split into smaller blocks or units that are then processed. Effective splitting or partitioning has an important role in effective image coding. The apparatus and method use a particular boundary partitioning processing for improving splitting, which can be used in improving compression performance. The boundary partitioning reduces unnecessary partitioning on the frame boundary and reduces complexity of forced partitioning procedure.
The invention is defined by the independent claims. The dependent claims define advantageous embodiments.

### DESCRIPTION OF THE DRAWINGS

The present description will be better understood from the following detailed description read in light of the accompanying drawings, wherein:
FIG. 1 is an illustration of an example of a video encoding apparatus;
FIG. 2 is an illustration an example of a video decoding apparatus;
FIG. 3 is an illustration of an example method involving boundary partitioning processing;
FIG. 4 is an illustration of another example method involving boundary partitioning processing;
FIG. 5 is an illustration of HD sequence (1920x1080) bottom boundary CTU (128x128) forced partition;
FIG. 6 is an illustration of HD sequences bottom boundary CTU forced BT partition;
FIG. 7 is an illustration of bottom boundary processing with a CTU forced TT partition;
FIG. 8 is an illustration of a bottom boundary CTU forced AMP partition
FIG. 9 is an illustration of a bottom boundary CTU forced QT + forced TT partition; and
FIG. 10 is an illustration of a forced TT for HD bottom boundary partition with limited aspect ratio 1:4

### DETAILED DESCRIPTION

In the following description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various exemplary aspects described herein may be combined with each other, unless specifically noted otherwise.

Video coding typically refers to the processing of a sequence of pictures, which form the video or video sequence. The term picture, image or frame may be used/are used synonymously in the field of video coding as well as in this application. Each picture is typically partitioned into a set of non-overlapping blocks. The encoding/decoding of the picture is typically performed on a block level where e.g. inter frame prediction or intra frame prediction are used to generate a prediction block, to subtract the prediction block from the current block (block currently processed/to be processed) to obtain a residual block, which is further transformed and quantized to reduce the amount of data to be transmitted (compression) whereas at the decoder side the inverse processing is applied to the encoded/compressed block to reconstruct the block (video block) for representation.

In the following boundary partitioning processing is disclosed in hybrid video coding or still image coding. However, the method discussed may be applied to individual pictures or images that need to be partitioned for other processing purposes. In the following boundary partition processing using triple tree (TT) or asymmetric partition (AMP) structure is disclosed. Instead of the conventional approach of forcing quad tree (QT), in the following, horizontal TT or AMP for bottom boundary and vertical TT or AMP for right boundary are introduced. For the right bottom corner boundary, forcing QT will be used until (1) the current CU on the image boundary does not need to be force partitioned, i.e. the CU is entirely within the boundary, (2) the current CU is only on the bottom boundary, or (3) the current CU is only on the right boundary. Triple tree and asymmetric partitioning are used in this description as examples only and may be replaced with other suitable partitioning schemes.

In the following description normal partition is used to mean non-forced rate distortion optimization based partitioning, where a partition flag is used in normal partition to indicate the partition type, such as a flag to indicate a horizontal binary tree partition, or a vertical binary tree partition, or a vertical triple tree partition, or a horizontal triple tree partition or any other supported partition types.

This arrangement has a benefit of providing possibility to maintain larger split block sizes until the remaining boundary samples in the current CU are exactly half of the block height/width. At this stage the binary partitioning can be used to terminate the partitioning processing.

In general, instead of forcing QT, boundary partition processing with TT or AMP may be first used to obtain the largest possible split CU of the boundary samples until all samples are inside of the frame boundary, or remaining boundary samples in current CU are exactly half of the block height/width, then BT is used to terminate the forced partition processing.

In another disclosed example a combination of forced QT and boundary partitioning processing is shown. Boundary partitioning processing is performed only after a certain number of QT partitioning levels. This is for instance advantageous in cases where the further partitioning after forced partitioning is limited according to a predefined configuration. For instance further partitioning of the current leaf node may be limited by a predefined maximal or minimal TT or AMP size, the maximal TT or AMP depth, etc. This allows to obtain a finer partition of the CU. For the combination of QT and boundary partitioning processing, the levels of QT could be predefined or adaptive selected in both encoder and decoder side using same method. It could also be adjusted by cost and signaled into the bitstream to indicate how many levels of forced QT are used for the decoder.

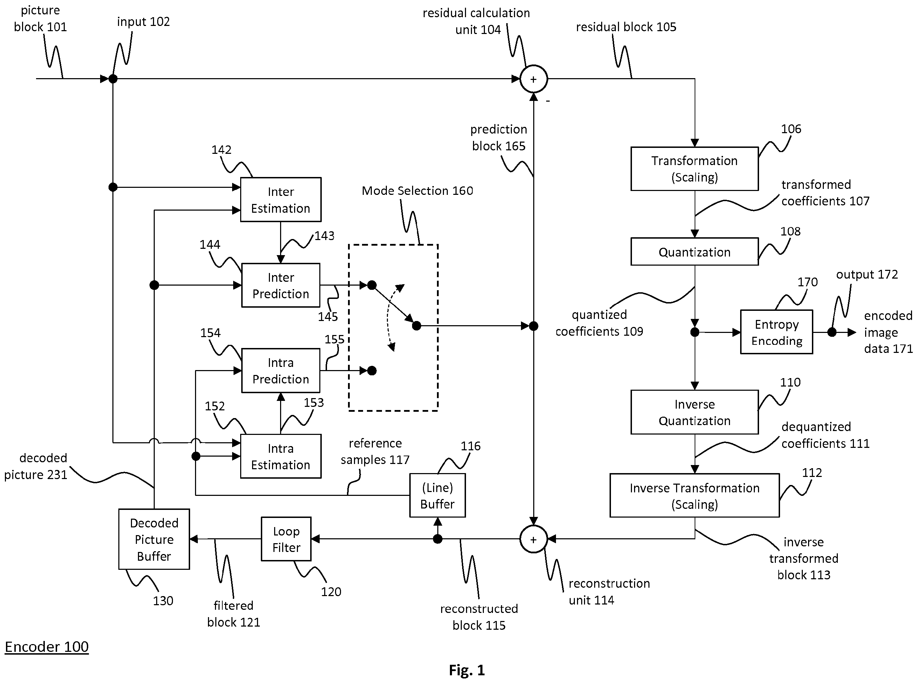

Fig. 1 shows an encoder 100, which comprises an input 102, a residual calculation unit 104, a transformation unit 106, a quantization unit 108, an inverse quantization unit 110, and inverse transformation unit 112, a reconstruction unit 114, a buffer 116, a loop filter 120, a frame buffer 130, an inter estimation unit 142, an inter prediction unit 144, an intra estimation unit 152, an intra prediction unit 154, a mode selection unit 160, an entropy encoding unit 170, and an output 172.

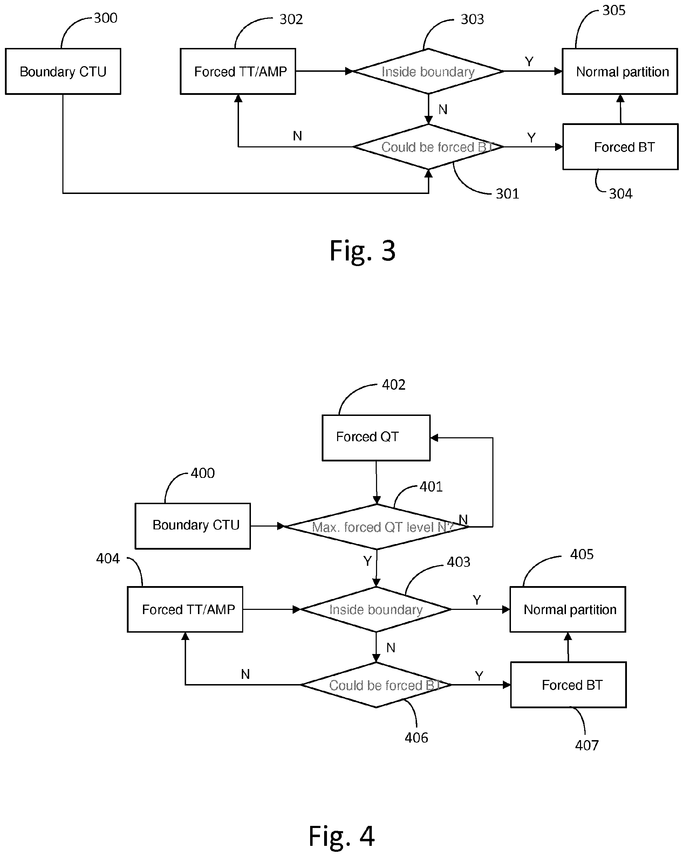

In the following description, particularly with regard figures 3 and 4, two example implementations are discussed. In the method according to figure 3, which will be described in detail in the following, a CU is force partitioned by applying the method described above until the CU is located entirely within the image boundary. At this point the forced partitioned CU may be further partitioned, sent to the input 102 and processed by the inter- or intra-processing blocks 142, 144, 154, 152 to obtain a RD value. The force partitioned CU may be further partitioned by using different partitioning schemes and the RD value is calculated. The CU with the smallest RD value will then be used to perform prediction.

In the implementation of figure 4, which will be described in detail in the following, the forced partitioning includes firstly performing one or more levels of QT partitioning. In an implementation the number of QT partitioning levels is predefined. Alternatively, the number of QT partitioning levels may be dynamically determined. For instance several forced partitioning loops, each including a different number of initial QT partitioning levels up a maximum threshold, are performed to obtain a corresponding partitioned CU. The at least one partitioned CU entirely lies within the image boundary and may be eventually further partitioned according to different partitioning schemes as described above with relation to figure 3. The so obtained CU is then processed by the Inter Estimation 142, Inter prediction 134, Intra prediction 154 or Intra estimation 152 to calculate an RD value and the partitioned CU with the smallest RD value is chosen for performing prediction. The maximum threshold may be calculated based on the size of the shorter edge within the image of the boundary CTU.

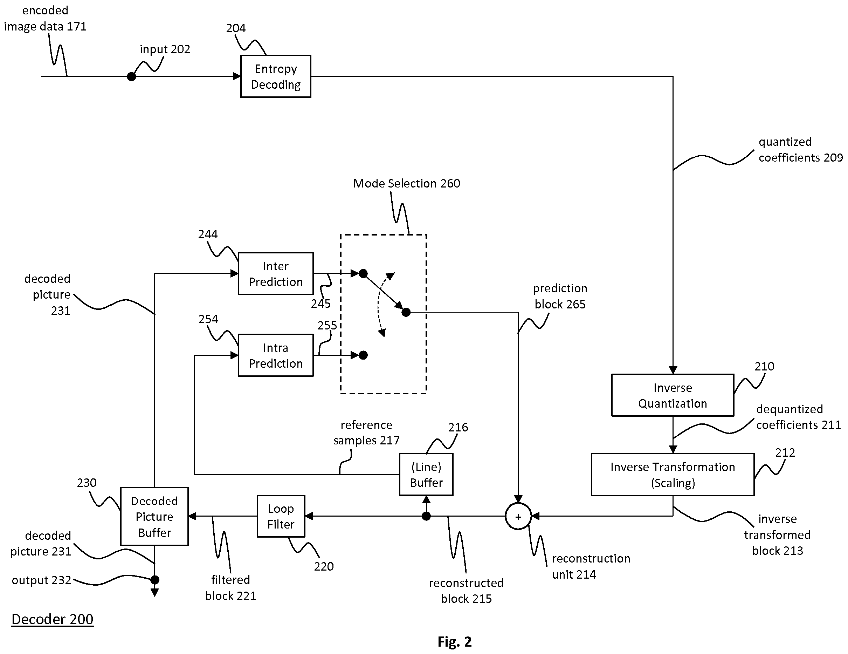

Fig. 2 shows an exemplary video decoder 200 configured to receive a encoded picture data (bitstream) 171, e.g. encoded by encoder 100, to obtain a decoded picture 231. The decoder 200 comprises an input 202, an entropy decoding unit 204, an inverse quantization unit 210, an inverse transformation unit 212, a reconstruction unit 214, a buffer 216, a loop filter unit 220, a decoded picture buffer 230, an inter prediction unit 244, an intra prediction unit 254, a mode selection unit 260 and an output 232.

With reference to figure 2 the decoder receives a bittream from the encoder. Forced partitioning is executed based the force partitioning scheme of the invention, known at the decoder, as discussed before with reference to figure 3 until the partitioned CU is entirely within the image boundary. Thereafter at the entropy decoding unit 204 partitioning information concerning the further partitioning is parsed from the bitstream and the force partitioned CU is further partitioned according said parsed partitioning information. The obtained partitioned CU is then further processed by the inter-/intra prediction unit for performing prediction.

With reference to figure 4, the entropy decoding unit 204 may parse from the bitstream the number of initial forced QT partitions before executing the forced partitioning scheme known at the decoder. The method proceeds then as described in the above paragraph.

Fig 3. is an illustration of an example method involving of boundary partition processing. In the method of Fig. 3 the method is initiated by determining if a coding tree unit of an image is located on an image boundary, step 300. In the example of Fig. 3 the determination is done for coding tree unit, however, this is only an example and the method may be initiated from a coding block that has been partitioned, split or other way derived from a coding tree unit. The boundary in the following description should be understood to be one of the following: horizontal boundary, vertical boundary or corner.

In the example of figure 3, as a response to the positive detection of a boundary coding tree unit, possibility to perform binary tree partitioning is checked, step 301. This may be done by determining whether the image boundary divides the coding unit into two portions having different or equal sizes. This, however, does not apply for corner cases, in which case additional forced QT partitioning is performed until the corner portion coding block is entirely inside the image boundary as will be explained in the following. If the two portions are of equal size, then symmetric binary tree partitioning is performed, step 301. If the two portions are of the equal size, the binary partitioning can be used to terminate the boundary forced partition processing and continue with normal partitioning, step 305.

If the two portions are of different size, boundary partition processing is initiated, step 302. In the figure 3 the boundary partition processing is one of the following: triple tree partitioning or asymmetric partitioning. These are explained in more detail below, however, other suitable partitioning methods may also be used.

After first boundary partition processing it is determined if the right boundary or bottom boundary sample of the current CTU/CU is located inside of the bottom image boundary or right image boundary. When it is inside, the method continues with normal partitioning, step 305. If it is not entirely inside, the method continues from step 301 by checking again the possibility to perform binary tree partitioning. Commonly the apparatus is configured to hierarchically repeat partitioning on child coding units, which are located on the image boundary, partitioned from the coding unit until a deepest level coding unit is entirely inside the image boundary.

Fig. 4 is an illustration of another example method involving boundary partitioning processing. The method of figure 4 starts correspondingly checking if the CTU or CU is on the image boundary as in the method of figure 3, step 400. If it is a boundary, first it is checked if a predetermined N shallowest levels quad tree partitioning have been performed, step 401. If not, then QT partitioning is performed at step 402, N being an integer smaller than the maximal number of forced partitioning hierarchy levels, here the maximal forced partition levels could be derived from the size of the shorter edge within the image of the boundary CTU. N may be predetermined, determined using a common method at encoder and decoder or provided in the bitstream. The common method may be a calculation based on temporal id, slice type, CTU size or similar. Typically theQT level N is integer number smaller than the maximal possible forced partition levels. It can be noted that if N is 0 the method simplifies to the example method shown in figure 3.

After QT partition the partitioning method proceeds with boundary partitioning processing similarly as in the example of figure 3. Thus, first it is checked if the CTU or CU is inside the image boundary, step 403 and if yes, the method proceeds to normal partitioning, step 405. If not, it is first checked if the image boundary divides the current CU into two equal size, which means a BT partition could be done , step 406. If yes, then the BT partitioning is done, step 407 and the method proceeds to normal partitioning, step 405. If no, the method is continued by triple tree or asymmetric partitioning, step 404.

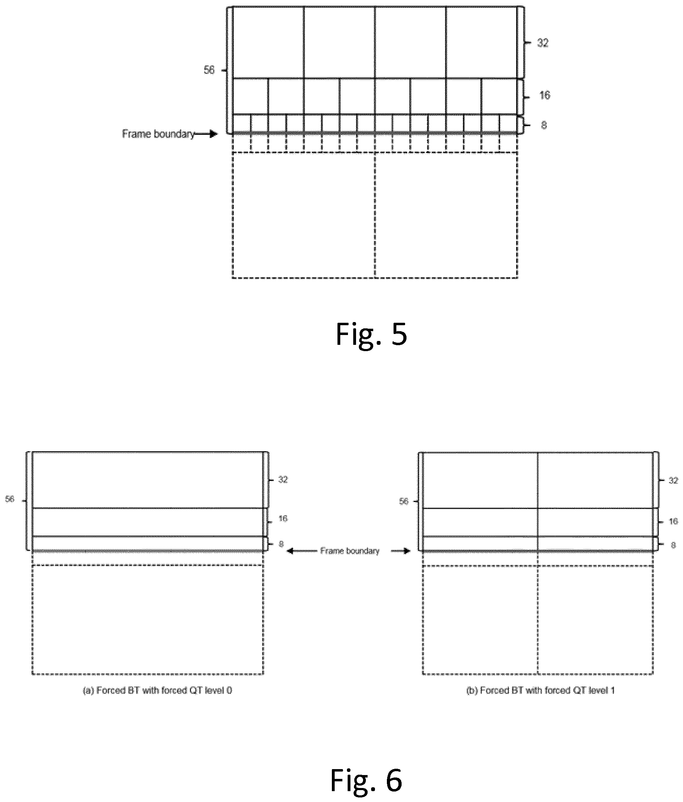

In figures 5 - 10 the partitioning process is explained in view of the conventional approaches and the approaches proposed in current invention. Fig. 5 discloses is an illustration of HD sequence (1920x1080) bottom boundary CTU (128x128) forced partition. In the HEVC standard and JVET test model JEM 7.0, the coding tree units (CTU) or coding unit (CU), which is located on the slice/picture boundaries will be forced split using quadtree (QT) until the right bottom sample of the leaf node is located within the slice/picture boundary. The forced QT partition does not need to be signaled in the bitstream. The purpose of a forced partition is to make the boundary CTU/CU possible by the encoder/decoder.

In JEM 7.0, the boundary CTU/CU forced partition process is inherited from HEVC although quad-tree plus binary tree structure was introduced in JEM. Which means CTU/CU located on the slice/picture boundary is first forced partitioned by quadtree (QT) structure without rate-distortion (RD) optimization until the whole current CU lies (?) is located inside the slice/picture boundary. These forced partitions do not need to be signaled in the bitstream. Further partitions of the forced partitioned CUs are possibly achieved based on RD optimization, which needs to be signaled in the bitstream. Figure 5 shows one forced partition example of the HD (1920x1080 pixels) sequence bottom boundary CTU (128x128) by a forced QT.

FIG. 6 is an illustration of HD sequences bottom boundary CTU forced BT partition. The forced BT partition (Fig. 6a) and a forced QT plus a forced BT partition (Fig. 6b) for the boundary CTUs are shown in Fig. 6. Instead of a forced QT partition, in the Fig. 6a forced BT approach, a forced horizontal BT for bottom boundary and a forced vertical BT for right boundary are used. For the right bottom corner boundary, a forced QT will be used until the current CU does not need to be force partitioned or the current CU is on the bottom or right boundary. Alternatively, the corner CTU/CU could be considered as either bottom boundary or right boundary CTU/CU. In addition, a forced BT can be combined with a forced QT partition as shown in Fig. 6b, wherein the forced BT partition is only done after a certain number of forced QT levels. For the combination of a forced QT and a forced BT partition, the levels of forced QT could be pre-defined or adaptive selected.

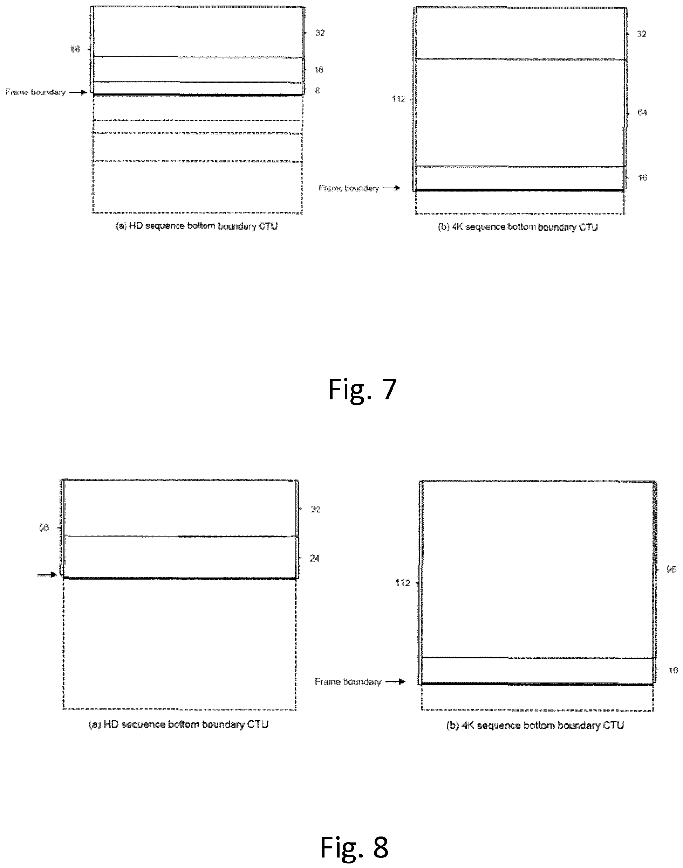

Figures 7 and 8 explain using triple tree and asymmetric partitioning in boundary partition processing. These two methods, or other corresponding methods, are optional to each other. Thus, the encoder and decoder should use the same method. This can be, for example, agreed in advance or signaled in the bitstream.

Fig. 7 is an illustration of bottom boundary processing with a CTU forced TT partition. Fig. 7 illustrates situations, wherein when the CTU/CU is located on the bottom boundary, horizontal forced TT is used without partition flag signaling at the encoder recursively until the boundary CU is entirely located within the slice/picture boundary. The forced horizontal TT partition is terminated when the deepest level coding unit is entirely inside the image boundary. In particular, the TT partition may be terminated in the following two cases: (a) When the right bottom sample of the boundary leaf nodes is located within the slice/picture bottom boundary, or (b) when height of the rest boundary samples within the slice/picture boundary in current CU is exactly half of the height of current boundary located CU, in the other words, the rest samples could be directly split by forced BT horizontally. In the (a) case, the forced partition is terminated, in the (b) case, after one step horizontal forced BT the forced partition is terminated.

After forced partition, forced TT with or without last forced BT step, the forced partitioned CUs from the boundary CTU are possibly further split based on RD-cost at the encoder and the further split flag is signaled from the encoder to the decoder. Fig. 7(a) shows the example of 128x56 samples bottom boundary (HD sequence bottom boundary CTU) partitioned by forced horizontal TT, in this case, no forced BT is applied to terminate the forced partition procedure. Figure 7(b) shows the example of 128x112 samples bottom boundary (4K sequence bottom boundary CTU) partitioned by forced TT, in this case, forced BT in the last forced partition is applied.

Similarly, for the CTU/CU located on the right boundary, vertical forced TT partition is used without partition flag signaling at the encoder recursively until the right bottom sample of the boundary leaf nodes are located within the slice/picture right boundary or the rest samples in current boundary located CU could be directly split by forced BT vertically. After forced vertical TT (with or without forced BT) partition, the forced partitioned CUs from the boundary CTU are possibly further split by RD-optimization at the encoder and the further split flag is signaled from the encoder to the decoder.

For the right bottom corner boundary located CTU/CU, first the forced QT partition is used without signaling recursively. When the right bottom sample of the current CU is located on the bottom or right boundary, a further forced horizontal or vertical TT partition will be operated recursively until the right bottom samples of the boundary leaf nodes located inside of the slice/picture boundary or the rest samples in current CU could be directly split by a forced BT on the direction of forced partition. Otherwise, when the right bottom sample of the current boundary located CU is still located on the corner boundary, a further forced QT partition will be used until the right bottom samples of the boundary leaf nodes are within the slice/picture boundary. The forced partitioned CUs from the boundary CTU are possibly further split by RD-optimization at the encoder and the further split flag is signaled from the encoder to the decoder. Figure 8 discloses similar arrangement with forced asymmetric partitioning (AMP). If the CTU/CU locates on the bottom boundary, forced bottom AMP will be applied recursively without any signaling until the boundary deepest level coding unit is entirely inside the slice/picture boundary. For example, forced bottom AMP will be recursively applied until the right bottom sample of the boundary leaf nodes located inside of the slice/picture bottom boundary or the rest samples of the current boundary located CU could be directly split by forced BT horizontally. The forced AMP should always keep the non-boundary forced partitioned CU as large as possible. After forced partition the forced split CUs from the boundary CTU are possibly further split based on RD-cost at the encoder and the further split flag is signaled from the encoder to the decoder. Figure 8(a) shows the example of 128x56 samples bottom boundary (HD sequence bottom boundary CTU) partitioned by forced horizontal AMP. In this case, no forced BT is applied to terminate the forced partition procedure. Figure 8(b) shows the example of 128x112 samples bottom boundary (4K sequence bottom boundary CTU) partitioned by forced TT. In this case, forced BT in the last forced partition is applied.

For the CTU/CU located on the right boundary, forced bottom AMP will be applied recursively without any signaling until, for instance, the right bottom sample of the boundary leaf nodes located inside of the slice/picture right boundary or the rest samples of the current boundary located CU could be directly split by forced BT on the direction of forced partition. The forced AMP should always keep the non-boundary forced partitioned CU as large as possible. After forced partition, the forced split CUs from the boundary CTU are possibly further split based on RD-cost at the encoder and the further split flag is signaled from the encoder to the decoder.

For the right bottom corner boundary located CTU/CU, first the forced QT partition is used without signaling it recursively. When the right bottom sample of the current CU is located on the bottom or right boundary, a further forced horizontal or vertical AMP partition will be operated recursively until the right bottom samples of the boundary leaf nodes located inside of the slice/picture boundary or the rest samples in current CU could be directly split by forced BT on the direction of forced partition. Otherwise, when the right bottom sample of the current boundary located CU is still located on the corner boundary, a further forced QT partition will be used until the right bottom samples of the leaf nodes within the slice/picture boundary. The forced partitioned CUs from the boundary CTU are possibly further split by RD-optimization at the encoder and the further split flag is signaled from the encoder to the decoder.

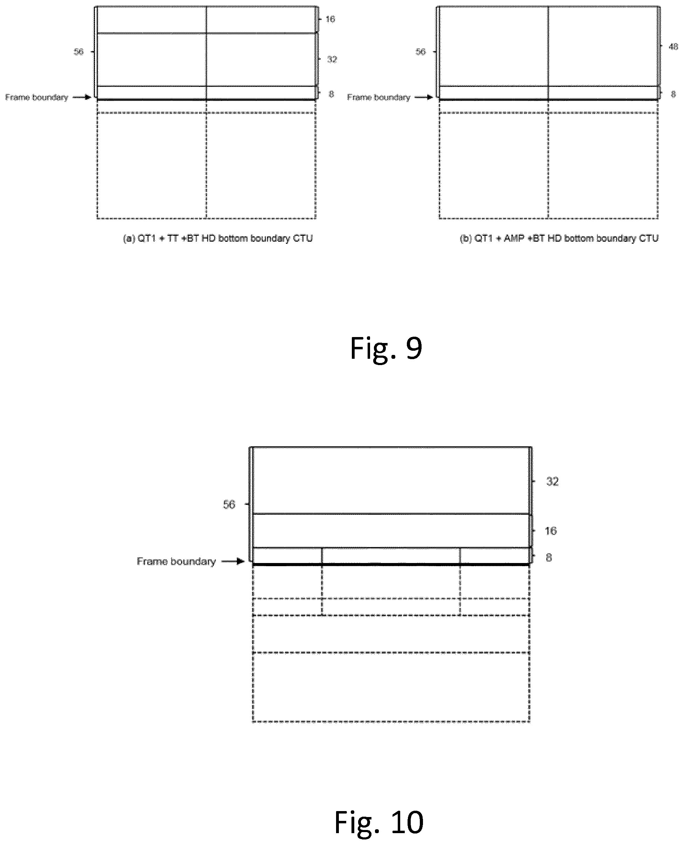

In Fig. 9 the combination of forced QT and forced TT/AMP (with or without last forced BT step) partition is shown. For some complex texture or motion on the boundary a detailed partition may benefit for the image quality. Therefore, the combined forced partition of QT and TT/AMP may be used. In the disclosed combination of a forced QT and a forced TT/AMP implementation, a forced TT/AMP partition is only done after a certain number of forced QT levels. In the forced TT/AMP and forced QT combined implementation, the number of forced QT levels could be pre-defined or adaptively selected. Figure 9(a) illustrates the example of one level QT and with a forced TT terminated by a forced BT partitioning of 128x56 samples at the bottom boundary in 128x128 CTU. Figure 8(b) illustrates the example of one level QT and with forced AMP terminated by forced BT partitioning of 128x56 samples bottom boundary in 128x128 CTU.

In general, TT of different art (uniform/non-uniform) or AMP of different art are also suitable for our forced TT/AMP + BT or combination of forced QT and forced TT/AMP +QT.

FIG. 10 is an illustration of a forced TT for HD bottom boundary partition with limited aspect ratio 1:4. In JEM software (after version 3.0), there is a definition of maximal BT size and a minimal BT size. For example, for Intra slice luma-component, the maximal BT size is 32 samples and the minimal BT size is 4 samples. When the long side of the current CU reach the maximal BT size or the short side of the current CU reach the minimal BT size, the current direction of BT split will be terminated. Instead, a normal directional BT split could be used. In other word, the maximal aspect ratio of previous CU is limited the BT splitting.

To make sure the further normal partition (non-forced, RDO based) has more freedom, the forced TT/AMP (+BT) partition could also be limited by aspect ratio of current leaf node. When the aspect ratio is larger than a threshold value, a normal directional forced TT/AMP(+BT) splitting will be used instead current forced partition. The threshold value may be pre-defined, calculated both in encoder and decoder side using the same method, for instance the threshold can be calculated based on the temporal ID of the frame or slice type, or transferred in bitstream and in the decoder parsed to indicate the limited aspect ratio. Figure 10 shows one example of forced TT partition limited by aspect ratio 1:4.

The aspect ratio of the current leaf node of the coding unit is limited as a criteria for partition direction when the aspect ratio exceeds a threshold value. The threshold may be predefined, derived using a predefined method or it may be included in the bitstream.

With the principles described above a video encoding apparatus, or a computer program for generating an encoded bitstream is able to produce the bitstream. The bitstream includes encoded units and partition information indicating how the coding tree units are partitioned so that the corresponding decoder is able to decode the encoded bitstream.

In the above the methods have been discussed from an encoder point of view. At the decoder side, corresponding boundary partition processing will be performed on the boundary CTUs/CUs.

For the forced TT/AMP partition, a horizontal TT/AMP, depicted in figures 7 and 8 respectively, will be used on the CTU/CU located on the bottom boundary until the right bottom samples of the boundary leaf nodes inside the slice/picture bottom boundary or the rest samples could be directly split by forced BT horizontally. Vertical TT/AMP (not shown) will be used on the CTU/CU located on the right boundary until the right bottom samples of the boundary leaf nodes inside the slice/picture right boundary or the rest samples could be directly split by BT vertically. The right bottom corner CTU/CU will be partitioned using QT until the right bottom samples of the boundary leaf node inside of the slice/picture boundary or the leaf nodes becoming right/bottom boundary case. Further partition is operated based on the decoded splitting flag.

For the forced TT/AMP partition, horizontal TT/AMP will be used on the CTU/CU located on the bottom boundary until the right bottom samples of the boundary leaf nodes inside the slice/picture bottom boundary or the rest samples could be directly split by forced BT horizontally. Vertical TT/AMP will be used on the CTU/CU located on the right boundary until the right bottom samples of the boundary leaf nodes inside the slice/picture right boundary or the rest samples could be directly split by BT vertically. The right bottom corner CTU/CU will be partitioned using QT until the right bottom samples of the boundary leaf node inside of the slice/picture boundary or the boundary leaf nodes becoming right/bottom boundary case. Further partition is operated based on the decoded splitting flag.

As explained above, the arrangements for image coding may be implemented in hardware, such as the video encoding apparatus or video decoding apparatus as described above, or as a method. The method may be implemented as a computer program. The computer program is then executed in a computing device.

The apparatus, such as video decoding apparatus, video encoding apparatus or any other corresponding image coding apparatus is configured to perform one of the methods described above. The apparatus comprises necessary hardware components. These may include at least one processor, at least one memory, at least one network connection, a bus and similar. Instead of dedicated hardware components it is possible to share, for example, memories or processors with other components or access at a cloud service, centralized computing unit or other resource that can be used over a network connection.

The image coding apparatus and the corresponding method have been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. An image coding apparatus, wherein when coding the apparatus is configured to:
determine (300, 400) if a coding unit of an image is located on an image boundary, wherein the coding unit is located on the image boundary when the coding unit comprises a first part located inside the image boundary and a second part located outside the image boundary; and in case the coding unit is located on the image boundary the apparatus is further configured to:
determine (301, 406) whether the image boundary divides the coding unit into two portions having different sizes or equal sizes;
perform a boundary partition processing (302, 404) on the coding unit, wherein the boundary partition processing comprises triple tree partitioning or asymmetric partitioning if the image boundary divides the coding unit into two portions having different sizes; and
perform a symmetric binary tree partition (304, 407) if the image boundary divides the coding unit into two portions having equal sizes.

2. The image coding apparatus of claim 1, wherein the apparatus is further configured to hierarchically repeat partitioning on child coding units, which are located on the image boundary, partitioned from the coding unit until a deepest level boundary coding unit is entirely inside the image boundary.

3. The image coding apparatus of claim 1 or 2, wherein the first partitioned coding unit is a coding tree unit.

4. The image coding apparatus of claim 1, 2 or 3, wherein the apparatus is further configured to firstly perform N levels of quad tree partitioning (402) after determining if a coding tree unit is located on the image boundary, wherein N is an integer smaller than the maximal number of partitioning hierarchy levels.

5. The image coding apparatus of claim 4, wherein the apparatus is further configured to: use a predefined N as the number of levels of quad tree partitioning (402); or derive N as number of levels of quad tree partitioning (402) using a predefined method.

6. The image coding apparatus according to any of claims 1 - 5, wherein the apparatus is further configured to use quad-tree partitioning in each hierarchy level for a corner boundary coding unit.

7. The image coding apparatus according to any of preceding claims 1 - 6, wherein the apparatus is an image encoding apparatus (100), and the image encoding apparatus (100) is further configured to generate a bitstream including the coded coding units and partitioning information indicating how the coding tree units are partitioned.

8. The image coding apparatus according to claim 7 when depending from claims 2 to 6, wherein the apparatus is further configured to further partition the deepest level boundary coding unit according to rate-distortion optimization.

9. The image coding apparatus according to any of preceding claim 1 - 6, wherein the apparatus is a decoding apparatus (200).

10. The image coding apparatus according to claim 9, wherein the apparatus is further configured to parse a bitstream including coded coding units and a partitioning information indicating how the coding tree units are partitioned.

11. The image coding apparatus of claim 3-10, wherein an indication of the Nlevels of quad tree partitioning (402) or the threshold of the aspect ratio of a coding unit is obtained from the partitioning information of the image.

12. A method for coding an image comprising:
determining (300, 400) if a coding unit of an image is located on an image boundary; and in case the coding unit is located on the image boundary, wherein the coding unit is located on the image boundary when the coding unit comprises a first part located inside the image boundary and a second part located outside the image boundary, the method further comprises:
determining (301, 406) whether the image boundary divides the coding unit into two portions having different sizes or equal sizes;
performing a boundary partition processing (302, 404) on the coding unit, wherein the boundary partition processing comprises triple tree partitioning or asymmetric partitioning if the image boundary divides the coding unit into two portions having different sizes; and
performing a symmetric binary tree partition (304, 407) if the image boundary divides the coding unit into two portions having equal sizes.

13. The method according to claim 12, wherein the method further comprises hierarchically repeating partitioning on child coding units partitioned from the coding unit until a deepest level boundary coding unit is entirely inside the image boundary.

14. The method according to claim 12 or 13, wherein the first partitioned coding unit is a coding tree unit.

15. The method according to any of preceding claims 12 - 14, wherein the method further comprises firstly performing N levels of quad tree partitioning (402) after determining if a coding tree unit is located on the image boundary, wherein N is an integer smaller than the maximal number of partitioning hierarchy levels.

## Patentansprüche

1. Bildcodierungsvorrichtung, wobei die Vorrichtung beim Codieren für Folgendes konfiguriert ist:
Bestimmen (300, 400), ob sich eine Codierungseinheit eines Bildes an einer Bildgrenze befindet, wobei sich die Codierungseinheit an der Bildgrenze befindet, wenn die Codierungseinheit einen ersten Teil umfasst, der sich innerhalb der Bildgrenze befindet, und einen zweiten Teil, der sich außerhalb der Bildgrenze befindet; und falls sich die Codierungseinheit an der Bildgrenze befindet, ist die Vorrichtung ferner für Folgendes konfiguriert:
Bestimmen (301, 406), ob die Bildgrenze die Codierungseinheit in zwei Abschnitte unterschiedlicher oder gleicher Größe teilt;
Durchführen einer Grenzpartitionsverarbeitung (302, 404) an der Codierungseinheit, wobei die Grenzpartitionsverarbeitung eine Tripletree-Partitionierung oder eine asymmetrische Partitionierung umfasst, wenn die Bildgrenze die Codierungseinheit in zwei Teile mit unterschiedlichen Größen teilt; und
Durchführen einer symmetrischen Binärbaumpartitionierung (304, 407) durch, wenn die Bildgrenze die Codierungseinheit in zwei gleich große Teile teilt.

2. Bildcodierungsvorrichtung nach Anspruch 1, wobei die Vorrichtung ferner dazu konfiguriert ist, die Partitionierung von untergeordneten Codierungseinheiten, die sich an der Bildgrenze befinden, hierarchisch zu wiederholen, wobei diese von der Codierungseinheit partitioniert werden, bis eine Codierungseinheit der tiefsten Grenzebene vollständig innerhalb der Bildgrenze liegt.

3. Bildcodierungsvorrichtung nach Anspruch 1 oder 2, wobei die erste partitionierte Codierungseinheit eine Codierungsbaumeinheit ist.

4. Bildcodierungsvorrichtung nach Anspruch 1, 2 oder 3, wobei die Vorrichtung weiterhin dazu konfiguriert ist, zunächst N Ebenen einer Quadtree-Partitionierung (402) durchzuführen, nachdem ermittelt wurde, ob sich eine Codierungsbaumeinheit an der Bildgrenze befindet, wobei N eine Ganzzahl ist, die kleiner als die maximale Anzahl von Partitionierungshierarchieebenen ist.

5. Bildcodierungsvorrichtung nach Anspruch 4, wobei die Vorrichtung ferner konfiguriert ist, um: ein vordefiniertes N als Anzahl der Ebenen der Quadtree-Partitionierung (402) zu verwenden; oder N als Anzahl der Ebenen der Quadtree-Partitionierung (402) unter Verwendung einer vordefinierten Methode abzuleiten.

6. Bildcodierungsvorrichtung nach einem der Ansprüche 1 bis 5, wobei die Vorrichtung weiterhin dazu konfiguriert ist, in jeder Hierarchieebene eine Quadtree-Partitionierung für eine Eckgrenzencodierungseinheit zu verwenden.

7. Bildcodierungsvorrichtung nach einem der vorhergehenden Ansprüche 1 bis 6, wobei die Vorrichtung eine Bildcodierungsvorrichtung (100) ist und die Bildcodierungsvorrichtung (100) ferner dazu konfiguriert ist, einen Bitstrom zu erzeugen, der die codierten Codierungseinheiten und Partitionierungsinformationen umfasst, die angeben, wie die Codierungsbaumeinheiten partitioniert sind.

8. Bildcodierungsvorrichtung nach Anspruch 7, sofern abhängig von den Ansprüchen 2 bis 6, wobei die Vorrichtung ferner dazu konfiguriert ist, die Codierungseinheit für die tiefste Ebene gemäß einer Ratenverzerrungsoptimierung weiter zu partitionieren.

9. Bildcodierungsvorrichtung nach einem der vorhergehenden Ansprüche 1 bis 6, wobei die Vorrichtung eine Decodierungsvorrichtung ( 200 ) ist.

10. Bildcodierungsvorrichtung nach Anspruch 9, wobei die Vorrichtung ferner dazu konfiguriert ist, einen Bitstrom zu analysieren, der codierte Codierungseinheiten und eine Partitionierungsinformation enthält, die angibt, wie die Codierungsbaumeinheiten partitioniert sind.

11. Bildcodierungsvorrichtung nach Anspruch 3 bis 10, wobei eine Angabe der N-Ebenen der Quadtree-Partitionierung (402) oder des Schwellenwerts des Seitenverhältnisses einer Codierungseinheit aus den Partitionierungsinformationen des Bildes gewonnen wird.

12. Verfahren zum Codieren eines Bildes, umfassend:
Bestimmen (300, 400), ob sich eine Codierungseinheit eines Bildes an einer Bildgrenze befindet; und falls sich die Codierungseinheit an der Bildgrenze befindet, wobei sich die Codierungseinheit an der Bildgrenze befindet, wenn die Codierungseinheit einen ersten Teil umfasst, der sich innerhalb der Bildgrenze befindet, und einen zweiten Teil, der sich außerhalb der Bildgrenze befindet, das Verfahren ferner Folgendes umfasst:
Bestimmen (301, 406), ob die Bildgrenze die Codierungseinheit in zwei Abschnitte unterschiedlicher oder gleicher Größe teilt;
Durchführen einer Grenzpartitionsverarbeitung (302, 404) an der Codierungseinheit, wobei die Grenzpartitionsverarbeitung eine Tripletree-Partitionierung oder eine asymmetrische Partitionierung umfasst, wenn die Bildgrenze die Codierungseinheit in zwei Teile mit unterschiedlichen Größen teilt; und
Durchführen einer symmetrischen Binärbaumpartitionierung (304, 407) durch, wenn die Bildgrenze die Codierungseinheit in zwei gleich große Teile teilt.

13. Verfahren nach Anspruch 12, wobei das Verfahren außerdem das hierarchisch wiederholte Aufteilen von untergeordneten Codierunseinheiten umfasst, die von der Codierunseinheit abgeteilt werden, bis eine Codierungseinheit mit einer Grenze auf der tiefsten Ebene vollständig innerhalb der Bildgrenze liegt.

14. Verfahren nach Anspruch 12 oder 13, wobei die erste partitionierte Codierungseinheit eine Codierungsbaumeinheit ist.

15. Verfahren nach einem der vorhergehenden Ansprüche 12 bis 14, wobei das Verfahren weiterhin zunächst das Durchführen von N-Ebenen einer Quadtree-Partitionierung (402) umfasst, nachdem ermittelt wurde, ob sich eine Codierungsbaumeinheit an der Bildgrenze befindet, wobei N eine Ganzzahl ist, die kleiner als die maximale Anzahl von Partitionierungshierarchieebenen ist.

## Revendications

1. Appareil de codage d'image, dans lequel, lors du codage, l'appareil est configuré pour :
déterminer (300, 400) si une unité de codage d'une image est située sur une limite d'image, dans lequel l'unité de codage est située sur la limite d'image lorsque l'unité de codage comprend une première partie située à l'intérieur de la limite d'image et une seconde partie située à l'extérieur de la limite d'image ; et dans le cas où l'unité de codage est située sur la limite d'image, l'appareil est également configuré pour :
déterminer (301, 406) si la limite d'image divise l'unité de codage en deux parties ayant des tailles différentes ou des tailles égales ;
exécuter un traitement de partition de limite (302, 404) sur l'unité de codage, dans lequel le traitement de partition de limite comprend un partitionnement d'arbre triple ou un partitionnement asymétrique si la limite d'image divise l'unité de codage en deux parties ayant des tailles différentes ; et
exécuter une partition d'arbre binaire symétrique (304, 407) si la limite d'image divise l'unité de codage en deux parties ayant des tailles égales.

2. Appareil de codage d'image selon la revendication 1, dans lequel l'appareil est également configuré pour répéter hiérarchiquement le partitionnement sur des unités de codage enfants, qui sont situées sur la limite d'image, partitionnées à partir de l'unité de codage jusqu'à ce qu'une unité de codage de limite de niveau la plus profonde soit entièrement à l'intérieur de la limite d'image.

3. Appareil de codage d'image selon la revendication 1 ou 2, dans lequel la première unité de codage partitionnée est une unité d'arbre de codage.

4. Appareil de codage d'image selon la revendication 1, 2 ou 3, dans lequel l'appareil est également configuré pour exécuter d'abord N niveaux de partitionnement d'arbre quaternaire (402) après avoir déterminé si une unité d'arbre de codage est située sur la limite d'image, dans lequel N est un entier inférieur au nombre maximal de niveaux de hiérarchie de partitionnement.

5. Appareil de codage d'image selon la revendication 4, dans lequel l'appareil est également configuré pour : utiliser un N prédéfini comme nombre de niveaux de partitionnement d'arbre quaternaire (402) ; ou dériver N comme nombre de niveaux de partitionnement d'arbre quaternaire (402) à l'aide d'un procédé prédéfini.

6. Appareil de codage d'image selon l'une quelconque des revendications 1 à 5, dans lequel l'appareil est également configuré pour utiliser un partitionnement d'arbre quaternaire dans chaque niveau de hiérarchie pour une unité de codage de limite de coin.

7. Appareil de codage d'image selon l'une quelconque des revendications précédentes 1 à 6, dans lequel l'appareil est un appareil de codage d'image (100), et l'appareil de codage d'image (100) est également configuré pour générer un flux binaire comportant les unités de codage codées et des informations de partitionnement indiquant comment les unités d'arbre de codage sont partitionnées.

8. Appareil de codage d'image selon la revendication 7 lorsqu'elle dépend des revendications 2 à 6, dans lequel l'appareil est également configuré pour partitionner davantage l'unité de codage de limite de niveau la plus profonde selon l'optimisation débit-distorsion.

9. Appareil de codage d'image selon l'une quelconque des revendications précédentes 1 à 6, dans lequel l'appareil est un appareil de décodage (200).

10. Appareil de codage d'image selon la revendication 9, dans lequel l'appareil est également configuré pour analyser un flux binaire comportant des unités de codage codées et des informations de partitionnement indiquant comment les unités d'arbre de codage sont partitionnées.

11. Appareil de codage d'image selon la revendication 3 à 10, dans lequel une indication des N niveaux de partitionnement d'arbre quaternaire (402) ou du seuil du rapport hauteur/largeur d'une unité de codage est obtenue à partir des informations de partitionnement de l'image.

12. Procédé de codage d'une image comprenant :
le fait de déterminer (300, 400) si une unité de codage d'une image est située sur une limite d'image ; et dans le cas où l'unité de codage est située sur la limite d'image, dans lequel l'unité de codage est située sur la limité d'image lorsque l'unité de codage comprend une première partie située à l'intérieur de la limite d'image et une seconde partie située à l'extérieur de la limite d'image, le procédé comprend également :
le fait de déterminer (301, 406) si la limite d'image divise l'unité de codage en deux parties ayant des tailles différentes ou des tailles égales ;
l'exécution d'un traitement de partition de limite (302, 404) sur l'unité de codage, dans lequel le traitement de partition de limite comprend un partitionnement d'arbre triple ou un partitionnement asymétrique si la limite d'image divise l'unité de codage en deux parties ayant des tailles différentes ; et
l'exécution d'une partition d'arbre binaire symétrique (304, 407) si la limite d'image divise l'unité de codage en deux parties ayant des tailles égales.

13. Procédé selon la revendication 12, dans lequel le procédé comprend également la répétition hiérarchique du partitionnement sur des unités de codage enfants partitionnées à partir de l'unité de codage jusqu'à ce qu'une unité de codage de limite de niveau la plus profonde soit entièrement à l'intérieur de la limite d'image.

14. Procédé selon la revendication 12 ou 13, dans lequel la première unité de codage partitionnée est une unité d'arbre de codage.

15. Procédé selon l'une quelconque des revendications précédentes 12 à 14, dans lequel le procédé comprend également d'abord l'exécution de N niveaux de partitionnement d'arbre quaternaire (402) après avoir déterminé si une unité d'arbre de codage est située sur la limite d'image, dans lequel N est un entier inférieur au nombre maximal de niveaux de hiérarchie de partitionnement.
